(19)

Europäisches
Patentamt
European
Patent Office
Office européen
des brevets

(11) **EP 2 320 055 A1**

(12) **EUROPEAN PATENT APPLICATION**
published in accordance with Art. 153(4) EPC

(43) Date of publication:
**11.05.2011 Bulletin 2011/19**

(51) Int Cl.:
*F02D 41/04* (2006.01)     *F02D 41/14* (2006.01)
*F02D 41/24* (2006.01)

(21) Application number: **09807884.3**

(22) Date of filing: **20.08.2009**

(86) International application number:
**PCT/CN2009/073367**

(87) International publication number:
**WO 2010/020185 (25.02.2010 Gazette 2010/08)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **22.08.2008 CN 200810030336**

(71) Applicant: **Chery Automobile Co., Ltd.
Wuhu, Anhui 241009 (CN)**

(72) Inventors:
• **ZHOU, Chongguang
Wuhu
Anhui 241009 (CN)**

• **WU, Peizhou
Wuhu
Anhui 241009 (CN)**
• **WANG, Qiuxia
Wuhu
Anhui 241009 (CN)**

(74) Representative: **Dossmann, Gérard
Casalonga & Partners
Bayerstrasse 71-73
80335 München (DE)**

(54) **CONTROL METHOD OF DIESEL ENGINE INTAKE VORTEX**

(57)     A method for controlling the air intake vortex of a diesel engine comprising the following steps: the open-loop control amount and the closed-loop control amount of the vortex are determined and the control modes are selected according to the operation condition of the engine; if the open-loop control mode is adopted, the control amount (X) of open-loop is directly used for adjusting a vortex valve; if the open-closed-loop control mode is adopted, the open-loop control amount (X) and the closed-loop control amount are employed in combination for the adjustment of the vortex valve. By combining the open-loop control mode with the open-closed-loop control mode and adopting a self-adaptive calculating method in the open-closed-loop control mode, this method enable the vortex intensity respond to the requirement of mixed fuel burning quickly and accurately so as to realize simultaneously sound engine efficiency, fuel cost economy and less environmental impact while ensuring good comfort of driving and meeting new requirements of modern automobiles. This method can be used to quickly and accurately control the vortex intensity so as to meet the requirements of the diesel engine under various operating conditions.

FIG 1

EP 2 320 055 A1

**Description**

**Field of the Invention**

The present invention relates to a method for controlling the air intake vortex of diesel engines.

**Description of the Prior art**

The compression ignition process of a diesel engine involves compression of the air, injection of the diesel fuel, mixing of the diesel fuel and air and ignition of the air-diesel mixture when the temperature of the compressed air in the cylinder increases to certain degree. Well mixed air-diesel mixture burns more thoroughly and generates less particulate carbon emission and other pollutants and thus help to improve engine efficiency, power output and fuel economy of the engine. However, merely depending on atomization of diesel oil cannot guarantee the even mixing of diesel and air; so air vortex means is introduced in the chamber to boost the mixing of the fuel and air. However, the intensity of the introduced air vortex has direct influence on the evenness of diesel-air mixture as well as its distribution in various areas in the cylinder, and thus affects the burning effect. Insufficient air vortex intensity tends to result in insufficient evenness of the mixture and poor engine efficiency and fuel economy. On the other hand, excessively strong air vortex will lead to excessively high maximum burning pressure and temperature in the cylinder and increased emission of NOx, causing environmental pollution. That is, different air vortex intensities are required under different operation conditions. Only the air vortex with appropriate intensity can give better play of the capability of an engine and reduce pollution generated in the burning process. At present, there has been no available method for controlling the air intake vortex of diesel engines that is capable of quickly and accurately controlling the air vortex intensity in a diesel engine so as to meet different requirement of the mixing of the diesel and air in the diesel engine under different operation conditions.

**Summary of the Invention**

To overcome the above mentioned deficiency of prior art, the technical object of the present invention is to provide a method that is capable of quickly and accurately controlling the air vortex intensity in a diesel engine so as to meet different requirements of the mixing of the diesel and air in the diesel engine under different operation conditions.
The technical object of the present invention is achieved by adopting the following technical solution:

A method for controlling the air intake vortex of diesel engines, comprising the following steps:

Step A: The electric control unit obtains the open-loop control amount (X) of a vortex valve according to engine speed (f1), injected diesel amount (f2) and a preset open-loop control table (M1) for the vortex valve; wherein the open-loop control table (M1) for the vortex valve is an experiments-based table indicating the relations among the engine speed (f1), injected diesel amount (f2) and the open-loop control amount (X) of the vortex valve;
Step B: The electric control unit selects to adopt an open-loop control mode or an open-closed-loop control mode according to the engine speed (f1) and injected diesel amount (f2); If the open-loop control mode is selected, step C is executed; if the open-closed-loop control mode is selected, step D is executed;
Step C: Under open-loop control mode: The electric control unit outputs the open-loop control amount (X) of the vortex valve obtained from step A to the vortex valve controller so as to regulate the vortex intensity by adjusting the opening degree of the vortex valve;
Step D: The open-closed-loop control mode comprises the following steps:
Step D1: The electric control unit obtains the expected closed-loop position amount (Y0) of the vortex valve according to the engine speed (f1), injected diesel amount (f2) and a preset closed-loop position mapping table (M2) of the vortex valve; the preset closed-loop position mapping table (M2) of the vortex valve is an experiment-based table indicating the relations among the engine speed (f1), injected diesel amount (f2) and the expected close-loop position amount (Y0) of the vortex valve;
Step D2: The electric control unit works out the closed-loop control amount (Yc) of the vortex valve according to the engine speed (f1), injected diesel amount (f2), the actual position amount (Yt) of the vortex valve as well as the expected closed-loop position amount (Y0) of the vortex valve that is obtained from step D1;
Step D3: The electric control unit works out the open-closed-loop control amount (Z) of the vortex valve according to the open-loop control amount (X) of the vortex valve obtained from step A and the closed-loop control amount (Yc) of the vortex valve obtained from step D2;
Step D4: The electric control unit outputs the open-closed-loop control amount (Z) of the vortex valve that is obtained from step D3 to the vortex valve controller, and changes the vortex intensity by adjusting the opening degree of the vortex valve.

Primarily, the control system implementing the present invention's method for controlling the air intake vortex of diesel engines comprises an ECU (electric control unit), an engine speed information acquisition unit, an injected diesel amount information acquisition unit, a vortex valve controller, a pull rod of the vortex valve, a vortex position sensor and a vortex valve configured in an intake manifold. Wherein the electric control unit receives the engine speed from the engine speed information acquisition unit and the injected diesel amount from the engine injected diesel amount information acquisition unit, and outputs the control amount of the vortex valve to the vortex valve controller. The vortex valve controller controls the opening degree of the vortex valve through the pull rod of the vortex valve, and the vortex valve position sensor feeds back the position amount of the vortex valve to the electric control unit.

Based on large amount of tests, the method for controlling the air intake vortex of diesel engines of the present invention obtains the open-loop control table (M1) of the vortex valvethat reflects the relations among the engine speed (f1), the injected diesel amount (f2) and the open-loop control amount (X) of the vortex valve as well as the closed-loop position mapping table(M2) of the vortex valve that reflects the relations of the engine speed (f1), the injected diesel amount (f2) and the expected closed-loop position amount (Y0) of the vortex valve. The control mode of the vortex valve controller is selected according to the actual engine operating condition, namely the engine speed (f1) and the injected diesel amount (f2) of the vortex valve. When the engine is operating with low speed and small load, the deviation from the vortex intensity has relatively smaller influence on the burning condition of the mixed fuel; therefore, by selecting open-loop control mode, the electric control unit directly regulate controls the vortex valve controller according to the open-loop control amount (X) of the vortex valve so as to and adjusts the vortex valve to the expected value of the vortex valve position in the open-loop control mode, thus so as to improve the system response speed of the system is improved. When the engine is operating with heavy load, the deviation from the vortex intensity has relatively bigger influence on the burning condition of the mixed fuel, then open-closed-loop control mode is therefore selected, whereby the electric control unit works out the closed-loop control amount (Yc) according to the deviation (YΔ) of the actual position of the vortex valve (Yt) from the expected closed-loop position amount (Y0) of the vortex valve. Then, using the open-loop control amount (X) of the vortex valve as a feed-forward control amount of the system combined with the closed-loop control amount (Yc) of the vortex valve, the electric control unit obtains the open-closed-loop control amount (Z) of the vortex valve, and outputs the open-closed-loop control amount (Z) of the vortex valve to the vortex valve controller, so as to adjust the opening degree of the vortex valve. In this way, at the same time of while taking account of the response speed of system, this control method is capable of improving the control accuracy of the system while guarantee the response speed of the system, so that the requirements for diesel engine under this operating condition is met and the comfort of driving is improved.

In the above recited step B, the electric control unit firstly obtains the lower threshold value of the injected diesel amount (Qlow), the higher threshold value of the injected diesel amount (Qhigh) corresponding to specific engine speed (f1) and the timing cycle (Ti). Only when the injected diesel amount (f2) within the timing cycle (Ti) is consistently more than the higher threshold value of the injected diesel amount or less than the lower threshold value of injected diesel amount (Qlow), the electric control unit selects the vortex control mode according to the injected diesel amount (f2) at the instant moment. When injected diesel amount (f2) is more than the higher threshold value of injected diesel amount (Qhigh) or less than the lower threshold value of injected diesel amount (Qlow), the timing cycle is started.

When the injected diesel amount (f2) within the timing cycle (Ti) is continuously more than the higher threshold value of injected diesel amount (Qhigh), the electric control unit selects the open-closed-loop control mode. When the injected diesel amount (f2) within the timing cycle (Ti) is continuously less than the lower threshold of injected diesel amount (Qlow), the electric control unit selects the open-loop control mode.

Further, the method for controlling the air intake vortex of diesel engines of the present invention involves establishing a relation table (M3) that reflects the engine speed (f1) and changes in the injected diesel amount (f2) as well as the changes in the burning conditions of the mixed fuel based on large amount of tests. In practical operation, the lower threshold value of injected diesel amount (Qlow), the higher threshold value of injected diesel amount (Qhigh) and the timing cycle (Ti) corresponding to the engine speed (f1) are searched out from table (M3), then comparison and extended-time assessment on these values are made. When the injected diesel amount (f2) is between the lower threshold value of the injected diesel amount (Qlow) and the higher threshold value of the injected diesel amount (Qhigh), it is indicated that the control mode of the vortex intensity can meet the current burning requirement of the mixed fuel, and it is not necessary to modify the control mode of vortex. When the injected diesel amount (f2) is more than the higher threshold value of the injected diesel amount (Qhigh) or less than the lower threshold value of the injected diesel amount (Qlow), it is indicated that rapid changes in the composition of the mixed fuel in the engine has occurred, and it is necessary to adjust the control mode of vortex to meet the requirement of burning. However, if the vortex control mode is adjusted with the change in the injected diesel amount (f2) at any moment, frequent and rapid changes in the burning condition of the mixed fuel will occur, resulting in reduced comfort of driving. To avoid the occurrence of such situation, the method of present invention provides certain delayed control, which means that the timing is started when the injected diesel amount (f2) is more than the higher threshold of injected diesel amount (Qhigh) or less than the lower threshold of injected diesel amount (Qlow) and that only if the injected diesel amount within the timing cycle (Ti) is continuously more than the higher threshold of injected diesel amount (Qhigh) or less than the lower threshold of injected diesel amount (Qlow), the electric control unit selects the vortex control mode according to the injected diesel amount (f2) at this moment. In this way, the control mode is not switched very frequently and quickly, and the electric control unit will not switch the control mode until the injected diesel amount (f2) has become stabilized for a period; and as a result, while the burning effect of the mixed fuel is improved, no frequent and rapid changes in the vortex intensity will happen and result in reduced driving comfort.

Generally, the increase in the injected diesel amount (f2) means that the driver wants to increase the speed or power of the engine, that is, the engine is operating with heavy load, and the deviation from the vortex intensity has relatively bigger influence on the burning condition of the mixed fuel; therefore open-closed-loop control mode should be selected. The decrease in the injected diesel amount (f2) means that the driver wants to decrease the speed or power of the engine, that is, the engine is operating with low speed or small load, and the deviation of the vortex intensity has relatively smaller influence on the burning condition of the mixed fuel; therefore open-loop control mode should be selected.

In step D2, the vortex valve of the electric control unit selects self-adaptive algorithm to work out the closed-loop control amount (Yc) of the vortex valve according to the deviation of the actual position amount (Yt) of the vortex valve relative to the expected closed-loop position amount (Y0)of the vortex valve that is obtained from step D1; the bigger the deviation of the actual position amount (Yt) of the vortex valve from the expected closed-loop position amount (Y0)of the vortex valve, the bigger the calculated value of the closed-loop control amount.

Specifically, the electric control unit firstly divides up several segments according to the engine speed (f1) and the injected diesel amount (f2) of the engine; then, the electric control unit selects the self-adaptive algorithm based on the segments where the deviation value of the actual position amount (Yt) of the vortex valve relative to the expected closed-loop position of the vortex valve obtained from step D1 is located and calculates the closed-loop control amount (Yc) of the vortex valve.

The following computing formula can be adopted in step D2:

$$Y_c = Y_{ic} + Y_{kc} \, ,$$

When $WinNeg \leq Y_\Delta \leq WinPos$ :

$$\begin{cases} Y_{kc} = Kp \cdot Y_\Delta; \\ Y_{ic} = Y_{i(c-1)} + Ki \cdot T0 \cdot Y_\Delta \end{cases};$$

When $Y_\Delta > WinPos$:

$$\begin{cases} Y_{kc} = Kp \cdot WinPos + KpPos \cdot (Y_\Delta - WinPos); \\ Y_{ic} = Y_{i(c-1)} + KiPos \cdot T0 \cdot Y_\Delta \end{cases};$$

When $Y_\Delta < WinNeg$:

$$\begin{cases} Y_{kc} = Kp \cdot WinNeg + KpNeg \cdot (Y_\Delta - WinNeg); \\ Y_{ic} = Y_{i(c-1)} + KiNeg \cdot T0 \cdot Y_\Delta \end{cases};$$

Wherein, the positive large-signal boundary value (WinPos), the negative large-signal boundary value (WinNeg), the small signal proportional constant (Kp), the positive large-signal proportional constant (KpPos), the negative large-signal proportional constant (KpNeg), the small signal integral constant (Ki), the positive large-signal integral constant (KiPos), the negative large-signal integral constant (KiNeg) and the sampling time (T0) in the formula are parameters in the relation table (M4) which is established based on large amount of tests to reflect the connections between the changes in the engine speed (f1) and the injected diesel amount (f2) and the changes of the burning conditions of the mixed fuel. Different engine speeds (f1) correspond to different parameters. These parameters may have corrections on the changes in the burning conditions of mixed fuel that are caused by the changes in the injected diesel amount (f2). In actual operation, the electric control unit obtains these parameters through looking up the table and calculating based on the engine speed (f1) and the injected diesel amount (f2); (Y$\Delta$) represents the deviation amount of the vortex valve position that is worked out according to the expected closed-loop position amount (Y0)of the vortex valve and the actual position amount (Yt) of the vortex valve; (Yc) represents the closed-loop control amount of the vortex valve.

By adopting the above self-adaptive calculation formula, it is feasible to make the closed-loop control amount (Yc) change along with the change in the amount of deviation of the vortex valve position. When the amount of deviation of the vortex valve position (Y$\Delta$) is relatively bigger, it is meant that the distance between the actual vortex valve position and the expected position is bigger and at this moment, the closed-loop control amount (Yc)of the vortex valve is bigger accordingly so that the adjusting speed of the vortex valve will be higher so as to make quick response to the requirement of burning mixed fuel. When the deviation amount of the vortex valve position (Y$\Delta$) is relatively smaller, it is meant that the distance between the actual vortex valve and the expected position is smaller, and the closed-loop control amount is smaller so that the adjustment speed and amplitude of the vortex valve will be smaller so as to reduce the vibration of the vortex valve in the proximity of the expected position and guarantee good comfort of driving.

The following formula is also applicable to the calculation in step D2:

$$Y_c = Y_{ic} + Y_{kc} \; ,$$

when WinNeg $\leq Y_\Delta \leq$ *WinPos* : $Y_{kc} = Kp \cdot Y_\Delta$ ;
when $Y_\Delta >$ WinPos: $Y_{kc} = Kp \cdot WinPos + KpPos \cdot (Y_\Delta -$ *WinPos*) ;
when $Y_\Delta <$ *WinNeg*: $Y_{kc} = Kp \cdot WinNeg + KpNeg \cdot (Y_\Delta -$ WinNeg) ;
when WinNeg $\leq Y_{\Delta p} \leq$ *WinPos* : $Y_{ic} = Y_{i(c-1)} + Ki \cdot T0 \cdot Y_{\Delta p}$ ;
when $Y_{\Delta p} >$ WinPos : $Y_{ic} = Y_{i(c-1)} + KiPos \cdot T0 \cdot Y_{\Delta p}$ ;
when $Y_{\Delta p} <$ *WinNeg* : $Y_{ic} = Y_{i(c-1)} + KiNeg \cdot T0 \cdot Y_{\Delta p}$°

Wherein: the positive large-signal boundary value (WinPos), the negative large-signal boundary value (WinNeg), the small signal proportional constant (Kp), the positive large-signal proportional constant (KpPos), the negative large-signal proportional constant (KpNeg), the small signal integral constant (Ki), the positive large-signal integral constant (KiPos), the negative large-signal integral constant (KiNeg) and the sampling time (T0) in the formulae are parameters in the relation table (M4) which is established based on large amount of tests to reflect the connections between the engine speed (f1), the injected diesel amount (f2) and the comfort of driving. In practical operation, the electric control unit obtains these parameters through looking up table and calculating based on the engine speed (f1) and the injected diesel amount (f2). (Y$\Delta$) represents a deviation amount of the vortex valve position that is calculated based on the expected closed-loop position amount (Y0) of the vortex valve and the actual position amount (Yt) of the vortex valve; (Y$\Delta$p) represents a corrective amount for the deviation amount of the vortex valve position obtained by filtering the expected closed-loop position amount (Y0) of the vortex valve obtained in the step D1 with a low-pass filter with gain and subtracting the result with the actual position amount (Yt) of the vortex valve. (Yc) refers to the closed-loop control amount.

After the expected closed-loop position amount (Y0) of the vortex valve being filtered with a low-pass filter with gain, possible noise can be removed, and the position amount becomes more stable and the vibration of the vortex valve nearby the expected position can be reduced so that the burning conditions of mixed fuel is capable of changing gradually and good comfort of driving can be achieved.

In step C, the electric control unit converts the open-loop control amount (X) of the vortex valve obtained in step A to duty cycle signals and outputs the duty cycle signals to the vortex valve controller. In step D4, the electric control unit converts the open-closed-loop control amount (Z) of the vortex valve obtained in the step D3 to the duty cycle signals and then outputs the duty cycle signals to the vortex valve controller. The duty cycle signals, i.e. PWM signals, can directly drive the vortex valve controller to act.

In Step D2, the actual position amount (Yt) of the vortex valve is obtained by the electric control unit through the feedback from the vortex valve position sensor set on the vortex valve controller. The vortex valve position sensor is set on the pull rod connected with the vortex valve and is capable of detecting the opening degree of the vortex valve at any moment. The electric control unit is capable of adjusting the vortex valve according to the actual position amount (Yt) of the vortex valve that is obtained from the feedback of the vortex valve position sensor so as to meet the requirement of the burning of the mixed fuel.

By combining the open-loop control mode and the open-closed-loop control mode, the present invention's method for controlling the air intake vortex of diesel engines is capable of adopting different vortex valve adjustment modes and adjustment speeds corresponding to the actual position of the vortex valve and the driving intention of the driver so that the vortex intensity may respond to the burning requirement of the mixed fuel quickly and accurately. Thus, not only requirements on engine efficiency, cost economy and low environmental impact can be satisfied in this way, desirable driving comfort may be realized simultaneously.

**Brief Description of the Drawings**

FIG 1 is the structural diagram of the intake vortex control system of the present invention;
FIG 2 is the flow chart of the control method of intake vortex of the present invention;
FIG 3 is the logic diagram of the control method of intake vortex of the present invention;
FIG 4 is the logic diagram of step D2 of the control method of intake vortex of the present invention.

**Detailed Description of the Preferred Embodiments**

The technical solution of the present invention is described in details below with reference to the attached drawings and specific embodiments.

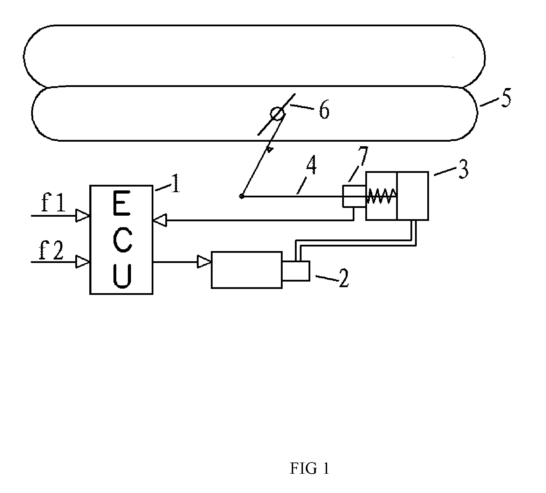

As shown in FIG 1, the control system implementing the present invention's method for controlling the air intake vortex of diesel engines comprises an ECU (namely an electric control unit 1), an engine speed information acquisition unit (not shown in the drawings), an injected diesel amount information acquisition unit (not shown in the drawings), a vortex valve controller jointly consisted of a vacuum valve 2 and a variable vortex vacuum valve 3, a pull rod of the vortex valve 4, a vortex valve position sensor 7 as well as a vortex valve 6 configured in an intake manifold 5. The electric control unit 1 receives the engine speed f1 from the engine speed information acquisition unit and the injected diesel amount f2 from the engine injected diesel amount information acquisition unit, and outputs the control amount of the vortex valve to the vacuum valve 2. The vacuum valve 2 further controls the variable vortex vacuum valve 3, and the opening degree of the vortex valve 6 is controlled through the pull rod of the vortex valve 4. The vortex valve position sensor 7 feeds back the position amount of the vortex valve 6 to the electric control unit 1. The vacuum valve 2 and the variable vortex vacuum valve 3 jointly control the opening degree of the vortex valve 6 so as to reduce the cost of the whole system and facilitate the arrangement of components.

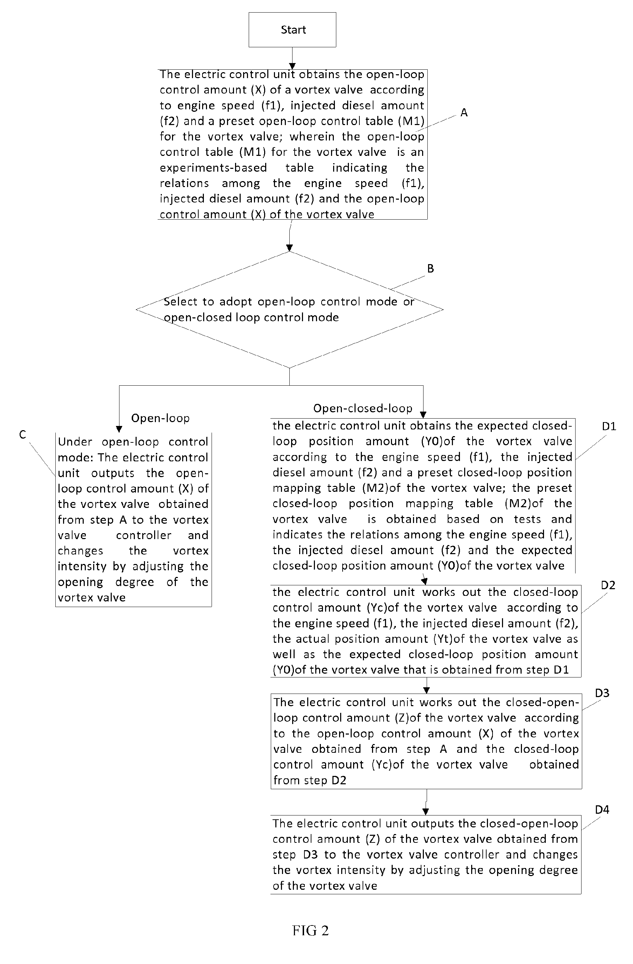

As shown in FIG 2, the method for controlling the air intake vortex of diesel engines of the present invention comprises the following steps:

Step A: the electric control unit obtains the open-loop control amount X of the vortex valve by looking up the preset open-loop control table M1 of the vortex valve according to the engine speed f1 and the injected diesel amount f2;
Step B: the electric control unit selects to adopt open-loop control mode or open-closed-loop control mode according to the engine speed f1 and the injected diesel amount f2; If open-loop control mode is selected, step C is executed; if open-closed-loop control mode is selected, step D is executed;
Step C: under open-loop control mode; the electric control unit outputs the open-loop control amount X of the vortex valve that is obtained from step A to the vortex valve controller and changes the vortex intensity by adjusting the opening degree of the vortex valve;
Step D: The open-closed-loop control mode comprises the following steps:
Step D1: the electric control unit obtains the expected closed-loop position amount Y0 of the vortex valve by looking up the preset closed-loop position mapping table M2 of the vortex valve according to the engine speed f1 and the injected diesel amount f2;
Step D2 : the electric control unit works out the closed-loop control amount Yc of the vortex valve according to the engine speed f1, the injected diesel amount f2, the actual position amount Yt of the vortex valve and the expected closed-loop position amount Y0 of the vortex valve that is obtained from step D1;
Step D3: The electric control unit works out the open-closed-loop control amount (Z) of the vortex valve adding the open-loop control amount (X) of the vortex valve obtained from step A and the closed-loop control amount (Yc) of the vortex valve obtained from step D2;
Step D4 : The electric control unit outputs the open-closed-loop control amount Z of the vortex valve that is obtained from step D3 to the vortex valve controller, and changes the vortex intensity by adjusting the opening degree of the vortex valve.

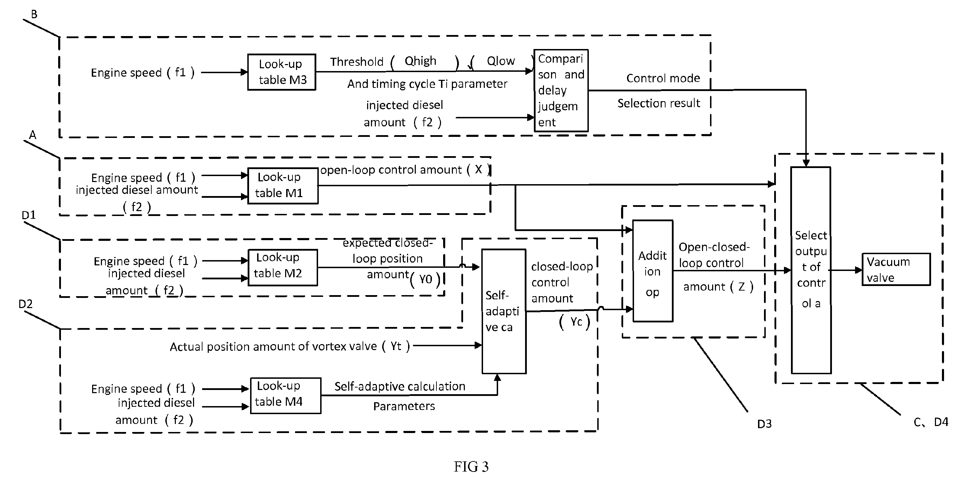

As shown in FIG 3,based on large amount of tests, the present invention's method for controlling the air intake vortex of diesel engines obtains the open-loop control table M1 of the vortex valve that reflects the relations among the engine speed f1, the injected diesel amount f2 and the control amount X of the vortex valve open-loop as well as the closed-loop position mapping table M2 of the vortex valve that reflects the relations of the engine speed f1, the injected diesel amount f2 and the expected closed-loop position amount Y0 of the vortex valve. When the engine is operating with low speed and small load, the open-loop control mode is selected, and the electric control unit directly controls the vortex valve controller according to the open-loop control amount X of the vortex valve and adjusts the vortex valve to the expected position of open-loop. When the engine is operating with heavy load, the open-closed-loop control mode is selected; the electric control unit works out the closed-loop control amount Yc based on both the actual position amount Yt of the vortex valve and the expected closed-loop position amount Y0 of the vortex valve and then obtains the open-closed-loop control amount Z using the open-loop control amount X as the feed-forward control amount of the system in combination with the closed-loop control amount Yc and outputs the open-closed-loop control amount Z to the vortex valve controller, so as to adjust the opening degree of the vortex valve.

In the above recited step B, the electric control unit firstly looks up table M3 to obtain the lower threshold value of the injected diesel amount Qlow, the higher threshold value of the injected diesel amount Qhigh and the timing cycle Ti corresponding to the engine speed f1, then makes comparison and extended-time judgment. Only if each injected diesel amount f2 is consistently more than the higher threshold value of the injected diesel amount Qhigh or less than the lower threshold value of the injected diesel amount Qlow within the timing cycle Ti, the electric control unit selects the vortex control mode according to the injected diesel amount f2 at this moment. And it should be noted the timing cycle Ti is started when the injected diesel amount f2 starts to be more than the higher threshold value of the injected diesel amount Qhigh or starts to be less than the lower threshold value of the injected diesel amount Qlow. The table M3 is established based on large amount of tests such as to reflect the relation among the engine speed f1, the injected diesel amount f2 and the changes in the burning conditions of the mixed fuel.

When the injected diesel amount f2 is consistently more than the higher threshold value of the injected diesel amount Qhigh within the timing cycle Ti, the electric control unit selects the open-closed-loop control mode; when the injected diesel amount f2 is consistently less than the lower threshold value of the injected diesel amount Qlow within the timing cycle Ti, the electric control unit selects the open-loop control mode.

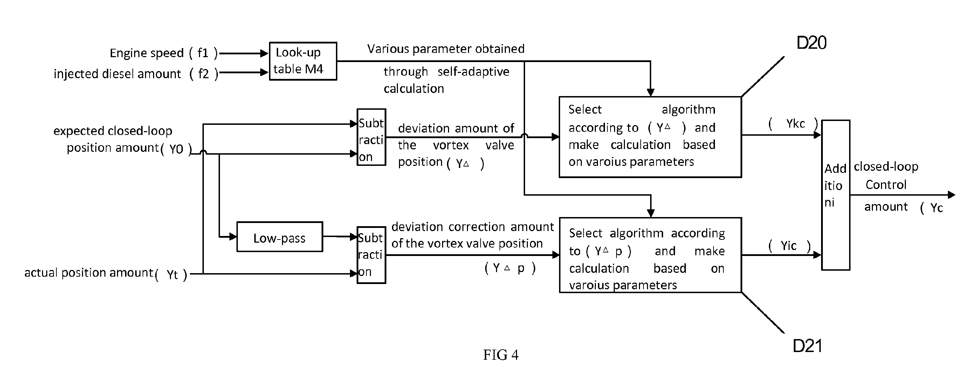

As shown in FIG 4, in step D2, by looking up the table M4 according to the engine speed engine speed f1 as well as the injected diesel amount f2, the electric control unit firstly obtains such parameters as the positive large-signal boundary value WinPos, the negative large-signal boundary value WinNeg, the small signal proportional constant Kp, the positive large-signal proportional constant KpPos, the negative large-signal proportional constant KpNeg , the small signal integral constant Ki, the positive large-signal integral constant KiPos, the negative large-signal integral constant KiNeg and the sampling time T0, then divides up three segments according to the positive large-signal boundary value WinPos and the negative large-signal boundary value WinNeg, and then the electric control unit selects the self-adaptive algorithm to work out Yic and Ykc according to the segment where the deviation amount $Y\Delta$ of the vortex valve position and the deviation correction amount YAp of the vortex valve, and obtains the closed-loop control amount Yc by adding Yic with Ykc. The deviation amount $Y\Delta$ of the vortex valve position is obtained by subtracting the expected closed-loop position amount Y0 from the actual position amount Yt. The deviation correction amount YAp of the vortex valve position is obtained by firstly filtering the expected closed-loop position amount of the vortex valve Y0 with a low-pass filter with gain and then subtracting the result with the actual position amount Yt of the vortex valve. Table M4 is established based on large amount of tests to reflect the relation among the engine speed f1, the injected diesel amount f2, the adjusting speed of the vortex valve and the changes in the burning conditions of mixed fuel, with different engine speeds f1 corresponding to different parameters. These parameters function as correction factors of the adjusting speed of the vortex valve under different injected diesel amounts f2, so as to guarantee good comfort of driving.

The following computing formula can be adopted in chart D20:

when WinNeg$\leq Y_\Delta \leq$ *WinPos*: $Y_{kc} = Kp \cdot Y_\Delta$;
when $Y_\Delta >$ WinPos: $Y_{kc} = Kp \cdot$ WinPos $+$ KpPos $\cdot (Y_\Delta -$ *WinPos*) ;
when $Y_\Delta <$ *WinNeg*: $Y_{kc} = Kp \cdot$ WinNeg $+$ KpNeg $\cdot (Y_\Delta -$ WinNeg) ;

The following formula is also applicable to the calculation in chart D21:

when WinNeg$\leq Y_{\Delta p} \leq$ *WinPos*: $Y_{ic} = Y_{i(c-1)} + Ki \cdot T0 \cdot Y_{\Delta p}$;
when $Y_{\Delta p} >$ WinPos: $Y_{ic} = Y_{i(c-1)} +$ *KiPos*$\cdot T0 \cdot Y_{\Delta p}$;
When $Y_{\Delta p} <$ *WinNeg*: $Y_{ic} = Y_{i(c-1)} +$ *KiNeg*$\cdot T0 \cdot Y_{\Delta p}$.

Adopting the above self-adaptive calculation formula enables that the closed-loop control amount Yc changes corresponding to the changes in the deviation amount $Y\Delta$ of the vortex valve position and the changes in the deviation correction amount Y$\Delta$p of the vortex valve position. When the deviation amount $Y\Delta$ of the vortex valve position and the deviation correction amount Y$\Delta$p of the vortex valve position are relatively bigger, the distance between the actual position of the vortex valve and its expected position are relatively bigger, and in such case the closed-loop control amount Yc is set relatively bigger so that the adjusting speed of the vortex valve is bigger to make quick response to the burning requirement of the mixed fuel. When the deviation amount Y∆ of the vortex valve position and the deviation correction amount Y∆p of the vortex valve position are relatively smaller, the distance between the actual position of the vortex valve and the expected position is relatively smaller, and the adjustment speed and amplitude of the vortex valve is accordingly set smaller by setting the closed-loop control amount Yc smaller, so as to reduce the vibration of the vortex valve in the proximity of the expected position and guarantee good comfort of driving.

Filtering the expected closed-loop position amount Y0 of the vortex valve with a low-pass filter with gain, possible noise can be removed, and the position amount becomes more stable and thus further reduce vibration of the vortex valve in the proximity of the expected position so that gradual changes of the burning conditions of mixed fuel can be guaranteed and good comfort of driving can be achieved.

In step C and step D4, according to the result of control mode selection, the electric control unit converts the open-loop control amount X of the vortex valve that is obtained in step A to duty cycle signals and outputs the duty cycle signals to the vortex valve controller, or converts the open-closed-loop control amount Z of the vortex valve that is obtained in step D3 to the duty cycle signals and then outputs the duty cycle signals to the vortex valve controller. The duty cycle signals, namely PWM signals, can directly drive the vortex valve controller to operate.

In Step D2, the electric control unit obtains the actual position amount Yt of the vortex valve based on the feedback from the vortex valve position sensor set on the vortex valve controller. The vortex valve position sensor is mounted on the pull rod connected with the vortex valve and is capable of detecting the opening degree of the vortex valve at any moment. The electric control unit is capable of adjusting the position of the vortex valve according to the actual vortex valve position amount Yt of the vortex valve that is obtained from the feedback of the vortex valve position sensor and ensures that the vortex valve is adjusted to desirable place to meet the requirement of the burning of the mixed fuel.

Combining the open-loop control mode and the open-closed-loop control mode, the present invention's method for controlling the air intake vortex of diesel engines provides different vortex valve adjustment modes and adjusting speeds that are adaptive to the actual position of the vortex valve and the driving intention of the driver, so that the vortex intensity can be quickly and accurately adjusted to make quick response to the requirement of the burning of the mixed fuel. In this way, sound engine efficiency and fuel cost economy and less environmental impact are realized while ensuring good comfort of driving and meeting new requirements of modern automobiles.

**Claims**

1.  A method for controlling the air intake vortex of diesel engines, **characterized in** the following: comprising the following steps:

    step A: the electric control unit obtains the open-loop control amount (X)of a vortex valve according to engine speed (f1), injected diesel amount (f2) and a preset open-loop control table (M1)for the vortex valve; wherein the open-loop control table (M1) for the vortex valve is an experiments-based table indicating the relations among the engine speed (f1), injected diesel amount (f2) and the open-loop control amount (X) of the vortex valve;
    Step B: the electric control unit selects to adopt open-loop control mode or open-closed-loop control mode according to the engine speed (f1) and the injected diesel amount (f2); If open-loop control mode is selected, step C is executed; if open-closed-loop control mode is selected, step D is executed;
    Step C: under open-loop control mode: The electric control unit outputs the open-loop control amount (X) of the vortex valve obtained from step A to the vortex valve controller and changes the vortex intensity by adjusting the opening degree of the vortex valve;
    Step D: The open-closed-loop control mode comprises the following steps:

        Step D1: the electric control unit obtains the expected closed-loop position amount (Y0)of the vortex valve according to the engine speed (f1), the injected diesel amount (f2) and a preset closed-loop position mapping table (M2) of the vortex valve; the preset closed-loop position mapping table (M2) of the vortex valve is obtained based on tests and indicates the relations among the engine speed (f1), the injected diesel amount (f2) and the expected closed-loop position amount (Y0) of the vortex valve;
        Step D2 : the electric control unit works out the closed-loop control amount (Yc)of the vortex valve according to the engine speed (f1), the injected diesel amount (f2), the actual position amount (Yt) of the vortex valve as well as the expected closed-loop position amount (Y0) of the vortex valve that is obtained from step D1;
        Step D3: The electric control unit works out the closed-open-loop control amount (Z)of the vortex valve according to the open-loop control amount (X) of the vortex valve obtained from step A and the closed-loop control amount (Yc)of the vortex valve obtained from step D2;

Step D4: The electric control unit outputs the closed-open-loop control amount (Z) of the vortex valve obtained from step D3 to the vortex valve controller and changes the vortex intensity by adjusting the opening degree of the vortex valve.

2. The method for controlling the air intake vortex of diesel engines according to claim 1, **characterized in** the following: in step B, the electric control unit firstly obtains the lower threshold value of the injected diesel amount (Qlow), the higher threshold value of injected diesel amount (Qhigh)corresponding to the engine speed (fl)and the timing cycle (Ti); Only when the injected diesel amount (f2) within the timing cycle(Ti) is consistently more than the higher threshold value of the injected diesel amount or is consistently less than the lower threshold value of injected diesel amount (Qlow), the electric control unit selects the vortex control mode according to the injected diesel amount (f2) at this moment; when injected diesel amount (f2) is more than the higher threshold value of injected diesel amount (Qhigh) or less than the lower threshold value of injected diesel amount (Qlow), the timing cycle is started.

3. The method for controlling the air intake vortex of diesel engines according to claim 2, **characterized in** the following: in step B, when the injected diesel amount (f2) within the timing cycle (Ti) is continuously more than the higher threshold value of injected diesel amount (Qhigh), the electric control unit selects the open-closed-loop control mode. When the injected diesel amount (f2) within the timing cycle (Ti) is continuously less than the lower threshold of injected diesel amount (Qlow), the electric control unit selects the open-loop control mode.

4. The method for controlling the air intake vortex of diesel engines of any of claim 1 or 2 or 3, **characterized in** the following: in step D2: the vortex valve of the electric control unit selects self-adaptive algorithm to work out the closed-loop control amount (Yc) of the vortex valve according to the deviation of the actual position amount (Yt) of the vortex valve relative to the expected closed-loop position amount (Y0) of the vortex valve that is obtained from step D1; the bigger the deviation of the actual position amount (Yt) of the vortex valve from the expected closed-loop position amount (Y0) of the vortex valve, the bigger the calculated value of the closed-loop control amount.

5. The method for controlling the air intake vortex of diesel engines according to claim 4, **characterized in** the following: in step D2:

$$Y_c = Y_{ic} + Y_{kc} \ ,$$

When WinNeg ≤ $Y_\Delta$ ≤ *WinPos* :

$$\begin{cases} Y_{kc} = Kp \cdot Y_\Delta; \\ Y_{ic} = Y_{i(c-1)} + Ki \cdot T0 \cdot Y_\Delta \end{cases} ;$$

When $Y_\Delta$ > WinPos :

$$\begin{cases} Y_{kc} = Kp \cdot WinPos + KpPos \cdot (Y_\Delta - WinPos); \\ Y_{ic} = Y_{i(c-1)} + KiPos \cdot T0 \cdot Y_\Delta \end{cases} ;$$

When $Y_\Delta$ < *WinNeg* :

$$\begin{cases} Y_{kc} = Kp \cdot WinNeg + KpNeg \cdot (Y_\Delta - WinNeg); \\ Y_{ic} = Y_{i(c-1)} + KiNeg \cdot T0 \cdot Y_\Delta \end{cases} ;$$

Wherein, WinPos refers to the positive large-signal boundary value, WinNeg refers to the negative large-signal boundary value, Kp refers to the small signal proportional constant, KpPos refers to the positive large-signal proportional constant, KpNeg refers to the negative large-signal proportional constant, Ki refers to the small signal integral constant, KiPos refers to the positive large-signal integral constant, KiNeg refers to the negative large-signal integral constant; T0 refers to the sampling time, and it is obtained by the electric control unit through looking up the table and calculating based on the engine speed f1 and the injected diesel amount f2; Y$\Delta$ refers to the deviation amount of the vortex valve position, and it is worked out based on the expected closed-loop position amount Y0 of the vortex valve and the actual position amount Yt of the vortex valve; Yc refers to the closed-loop control amount.

6. The method for controlling the air intake vortex of diesel engines according to claim 4, **characterized in** the following: in step D2 :

$$Y_c = Y_{ic} + Y_{kc} \ ,$$

when WinNeg $\leq Y_\Delta \leq$ *WinPos :* $Y_{kc} = Kp \cdot Y_\Delta$;
when $Y_\Delta >$ WinPos: $Y_{kc} = Kp \cdot$ WinPos$+$KpPos$\cdot(Y_\Delta -$ *WinPos*);
when $Y_\Delta <$ *WinNeg*: $Y_{kc} = Kp \cdot$ WinNeg $+$ KpNeg $\cdot (Y_\Delta -$ WinNeg);
when WinNeg $\leq Y_{\Delta p} \leq$ *WinPos*: $Y_{ic} = Y_{i(c-1)} + Ki \cdot T0 \cdot Y_{\Delta p}$;
when $Y_{\Delta p} >$ WinPos: $Y_{ic} = Y_{i(c-1)} + KiPos \cdot T0 \cdot Y_{\Delta p}$;
when $Y_{\Delta p} <$ *WinNeg*: $Y_{ic} = Y_{i(c-1)} + KiNeg \cdot T0 \cdot Y_{\Delta p}$ ;
Where WinPos refers to the positive large-signal boundary value, WinNeg refers to the negative large-signal boundary value, Kp refers to the small signal proportional constant, KpPos refers to the positive large-signal proportional constant, KpNeg refers to the negative large-signal proportional constant, Ki refers to the small signal integral constant, KiPos refers to the positive large-signal integral constant, KiNeg refers to the negative large-signal integral constant and T0 refers to the sampling time, which are obtained by the electric control unit through looking up the table and calculation based on the engine speed f1 and the injected diesel amount f2; Y$\Delta$ refers to the deviation amount of the vortex valve position, and it is worked out according to the expected closed-loop position amount of the vortex valve and the actual position amount of the vortex valve; YAp refers to a deviation correction amount of the vortex valve position, and it is obtained by firstly filtering the expected closed-loop position amount of the vortex valve with a low-pass filter with gain, and then subtracting the filtering result with the actual position amount of the vortex valve; Yc refers to the closed-loop control amount.

7. The method for controlling the air intake vortex of diesel engines according to claim 5, **characterized in** the following: in step C, the electric control unit converts the open-loop control amount of the vortex valve obtained in the step A to duty cycle signals and outputs the duty cycle signals to the vortex valve controller; in step D4, the electric control unit converts the open-closed-loop control amount of the vortex valve obtained in step D3 to the duty cycle signals and then outputs the duty cycle signals to the vortex valve controller.

8. The method for controlling the air intake vortex of diesel engines according to claim 7, **characterized in** the following: in Step D2, the actual position amount of the vortex valve is obtained by the electric control unit through the feedback from the vortex valve position sensor mounted on the vortex valve controller.

9. The method for controlling the air intake vortex of diesel engines according to claim 6, **characterized in** the following: in step C, the electric control unit converts the open-loop control amount of the vortex valve obtained in the step A to duty cycle signals and outputs the duty cycle signals to the vortex valve controller; in step D4, the electric control unit converts the open-closed-loop control amount of the vortex valve obtained in step D3 to duty cycle signals and then outputs the duty cycle signals to the vortex valve controller.

10. The method for controlling the air intake vortex of diesel engines according to claim 9, **characterized in** the following: in Step D2, the actual position amount of the vortex valve is obtained by the electric control unit through the feedback from the vortex valve position sensor mounted on the vortex valve controller.

FIG 1

Start

The electric control unit obtains the open-loop control amount (X) of a vortex valve according to engine speed (f1), injected diesel amount (f2) and a preset open-loop control table (M1) for the vortex valve; wherein the open-loop control table (M1) for the vortex valve is an experiments-based table indicating the relations among the engine speed (f1), injected diesel amount (f2) and the open-loop control amount (X) of the vortex valve

A

Select to adopt open-loop control mode or open-closed loop control mode

B

Open-loop

C

Under open-loop control mode: The electric control unit outputs the open-loop control amount (X) of the vortex valve obtained from step A to the vortex valve controller and changes the vortex intensity by adjusting the opening degree of the vortex valve

Open-closed-loop

the electric control unit obtains the expected closed-loop position amount (Y0) of the vortex valve according to the engine speed (f1), the injected diesel amount (f2) and a preset closed-loop position mapping table (M2) of the vortex valve; the preset closed-loop position mapping table (M2) of the vortex valve is obtained based on tests and indicates the relations among the engine speed (f1), the injected diesel amount (f2) and the expected closed-loop position amount (Y0) of the vortex valve

D1

the electric control unit works out the closed-loop control amount (Yc) of the vortex valve according to the engine speed (f1), the injected diesel amount (f2), the actual position amount (Yt) of the vortex valve as well as the expected closed-loop position amount (Y0) of the vortex valve that is obtained from step D1

D2

The electric control unit works out the closed-open-loop control amount (Z) of the vortex valve according to the open-loop control amount (X) of the vortex valve obtained from step A and the closed-loop control amount (Yc) of the vortex valve obtained from step D2

D3

The electric control unit outputs the closed-open-loop control amount (Z) of the vortex valve obtained from step D3 to the vortex valve controller and changes the vortex intensity by adjusting the opening degree of the vortex valve

D4

FIG 2

B

Engine speed （f1） → Look-up table M3 → Threshold （ Qhigh ） （ Qlow ） And timing cycle Ti parameter → Compari son and delay judgem ent

injected diesel amount （f2） →

Control mode

Selection result

A

Engine speed （f1） → Look-up table M1 open-loop control amount （ X ）
injected diesel amount （f2） →

D1

Engine speed （f1） → Look-up table M2 → expected closed-loop position amount（ Y0 ）
injected diesel amount （f2） →

Self-adapti ve ca → closed-loop control amount （ Yc ）

D2

Actual position amount of vortex valve （ Yt ） →

Engine speed （f1） → Look-up table M4 → Self-adaptive calculation Parameters
injected diesel amount （f2） →

Addit ion op → Open-closed-loop control amount （ Z ）

Select outpu t of contr ol a → Vacuum valve

D3

C、 D4

FIG 3

EP 2 320 055 A1

Engine speed（f1）⟶ Look-up table M4

injected diesel amount（f2）⟶

Various parameter obtained through self-adaptive calculation

D20

expected closed-loop position amount（Y0）

Subtraction

deviation amount of the vortex valve position（$Y_\triangle$）

Select algorithm according to（$Y_\triangle$）and make calculation based on varoius parameters

（Ykc）

Addition

closed-loop Control amount（Yc）

Low-pass

Subtraction

deviation correction amount of the vortex valve position（$Y_\triangle p$）

actual position amount（Yt）

Select algorithm according to（$Y_\triangle p$）and make calculation based on varoius parameters

（Yic）

D21

FIG 4

# INTERNATIONAL SEARCH REPORT

| | International application No. |
|---|---|
| | PCT/CN2009/073367 |

**A.   CLASSIFICATION OF SUBJECT MATTER**

See extra sheet
According to International Patent Classification (IPC) or to both national classification and IPC

**B.    FIELDS SEARCHED**

Minimum documentation searched (classification system followed by classification symbols)

IPC: F02D41/04; F02D41/14; F02D41/24; F02D45/00; F02D9/00; F02D9/02; F02D9/08; F02D; F02M; F02B;

Documentation searched other than minimum documentation to the extent that such documents are included in the fields searched

Electronic data base consulted during the international search (name of data base and, where practicable, search terms used)

WPI; EPODOC; PAJ; CNKI; IEE; CPRS   open loop, closed loop, intake, inlet, vortex, swirl, valve,

**C.   DOCUMENTS CONSIDERED TO BE RELEVANT**

| Category* | Citation of document, with indication, where appropriate, of the relevant passages | Relevant to claim No. |
|---|---|---|
| A | GB2438706A(FORD GLOBAL TECH LLC) 05 Dec.2007(05.12.2007)<br><br>See pages 5-22 of the description and figs.1-6 | 1-10 |
| P,X | CN101344042A (CHERY AUTOMOBILE CO.,LTD.)14 Jan.2009(14.01.2009)<br><br>See the whole document | 1-10 |
| A | CN1026347C(UNIV TIANJIN)26 Oct.1994(26.10.1994) See the whole document | 1-10 |
| A | US4402289A(NISSAN MOTOR)06 Sep.1983(06.09.1983)<br><br>See the whole document | 1-10 |

☒  Further documents are listed in the continuation of Box C.          ☒  See patent family annex.

| *       Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim (S) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
|---|---|
| 10 Oct.2009 (10.10.2009) | **26 Nov. 2009 (26.11.2009)** |

| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>HAN Wei<br><br>Telephone No. (86-10)62085295 |
|---|---|

Form PCT/ISA /210 (second sheet) (July 2009)

## INTERNATIONAL SEARCH REPORT

| International application No. |
| --- |
| PCT/CN2009/073367 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | US4391253A(TOYOTA MOTOR CO LTD)05 Jul.1983(05.07.1983)<br><br>See the whole document | 1-10 |
| A | US4526148A(HONDA MOTOR CO LTD)02 Jul.1985(02.07.1985)<br><br>See the whole document | 1-10 |

Form PCT/ISA /210 (continuation of second sheet ) (July 2009)

## INTERNATIONAL SEARCH REPORT
### Information on patent family members

| International application No. |
| --- |
| PCT/CN2009/073367 |

| Patent Documents referred in the Report | Publication Date | Patent Family | Publication Date |
| --- | --- | --- | --- |
| GB2438706A | 05.12.2007 | None | |
| CN101344042A | 14.01.2009 | None | |
| CN1026347C | 26.10.1994 | CN1065904A | 04.11.1992 |
| US4402289A | 06.09.1983 | DE3019608A1 | 10.12.1980 |
| | | GB2053508A | 04.02.1981 |
| | | FR2457383A1 | 23.01.1981 |
| | | DE3019608C2 | 14.10.1982 |
| | | GB2053508B | 14.12.1983 |
| | | US4545348A | 08.10.1985 |
| US4391253A | 05.07.1983 | None | |
| US4526148A | 02.07.1985 | JP58170838A | 07.10.1983 |
| | | JP62021971B | 15.05.1987 |
| | | JP1416048C | 10.12.1987 |

Form PCT/ISA /210 (patent family annex) (July 2009)

## INTERNATIONAL SEARCH REPORT

International application No.

PCT/CN2009/073367

**A. CLASSIFICATION OF SUBJECT MATTER**

According to International Patent Classification (IPC) or to both national classification and IPC

F02D41/04(2006.01)i
F02D41/14(2006.01)i

F02D41/24(2006.01)i

Form PCT/ISA /210 (extra sheet) (July 2009)